# EUROPEAN PATENT APPLICATION

(11) **EP 0 557 258 A1**
(43) Date of publication of application: **25.08.1993**
(21) Application number: 93830063.9
(22) Date of filing: 19.02.1993
(51) Int. Cl.: B01D 29/11

(54) **Apparatus for filtering suspensions**

(30) Priority: 20.02.1992 IT MI920369
(71) Applicant: COMER S.p.A., S. Vito Di Leguzzano (Vicenza) (IT)
(72) Inventor: Segalla, Rodolfo, Schio (Vicenza) (IT); Bottene, Sergio, Schio (Vicenza) (IT)
(74) Representative: Mercurio, Franco

(57) **Abstract**

The present invention concerns an apparatus to filter thin layers or fibrous suspensions in general, including an entrance of the suspension, a fixed perforated drum (6), a rotor (7) revolving therein, an exit of the accepted part and an exit of the refuse, and scrapers (8) rotating integrally with the rotor (7). Each scraper (8) positioned perpendicular to the drum (6) is carried by a scraper carrier (9). Spring-like means push each scraper (8) against the drum (6). Disengaging means are applied to each scraper carrier (9) so that the scrapers (8) may be shifted one by one from the said drum (6).

## Description

The present invention concerns an apparatus to filter thin layers or fibrous suspensions in general, with the object of solving in a new way the technical problems unsolved by the filtering apparatus of prior art. Said technical problems concern the disengaging of the proper scrapers and the adjusting of the pressure of said scrapers against a perforated drum in said filtering apparatus.

More precisely, in the prior art, as disclosed for example in US pat. N. 4.880.539, no means are provided for the disengaging of said scrapers and thus in US pat. N. 2.347.716 a tool is provided for said shifting of the scrapers, but it is separate from the filtering apparatus with the consequence that it must be introduced every time in the apparatus generating an inconvenience in its use. There is the further drawback that it is not possible to shift the scrapers one by one, but all integral with each other. Furthermore, in both the above-mentioned patents it is not possible to adjust the pressure of the scrapers against the drum, the former having a non-adjustable fixed spring.

The object of the present invention is to remove the above-mentioned drawbacks, being this provided with the characteristics which will be clearly pointed out in the following description, with the subsequent advantages of a non-limiting embodiment, made referring to the annexed figures wherein :
Fig.1 is a top view of the apparatus subject matter of the invention;
Fig.2 is a cross section of the apparatus along the line II-II of fig.1;

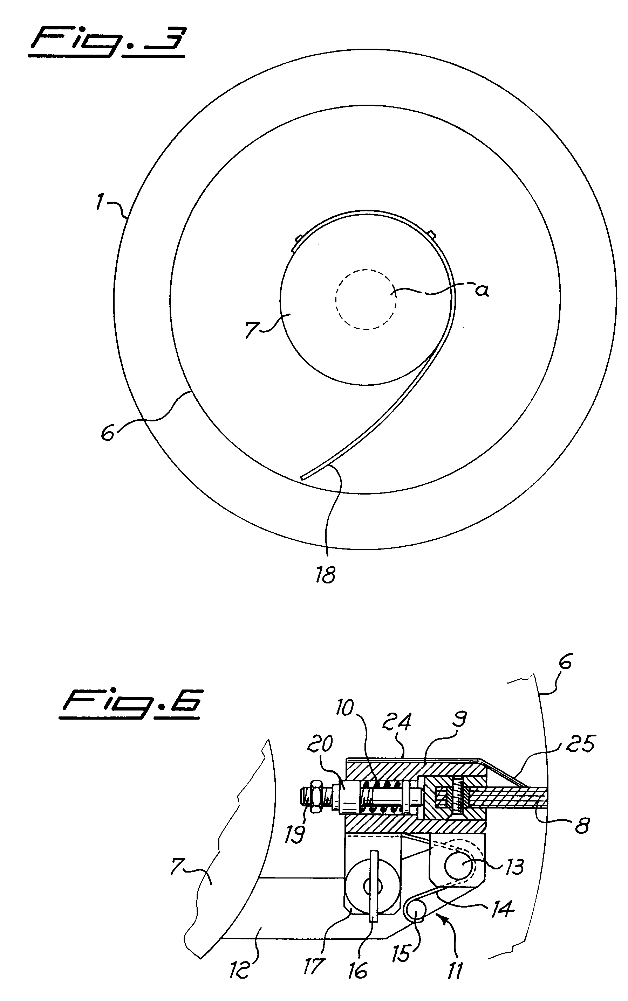

Fig.3 is a plan view of the lower part of the apparatus;
Fig.4 shows the scraper in the disengaged position;
Fig.5 shows a second embodiment of the upper part of the apparatus; and
Fig.6 shows another embodiment of the scraper.

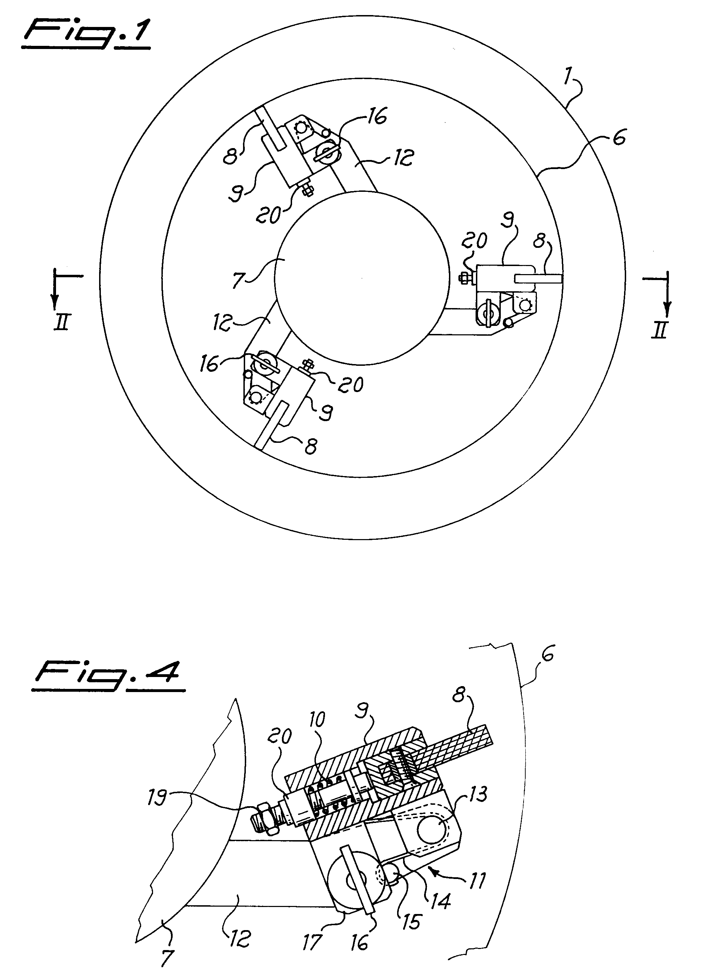

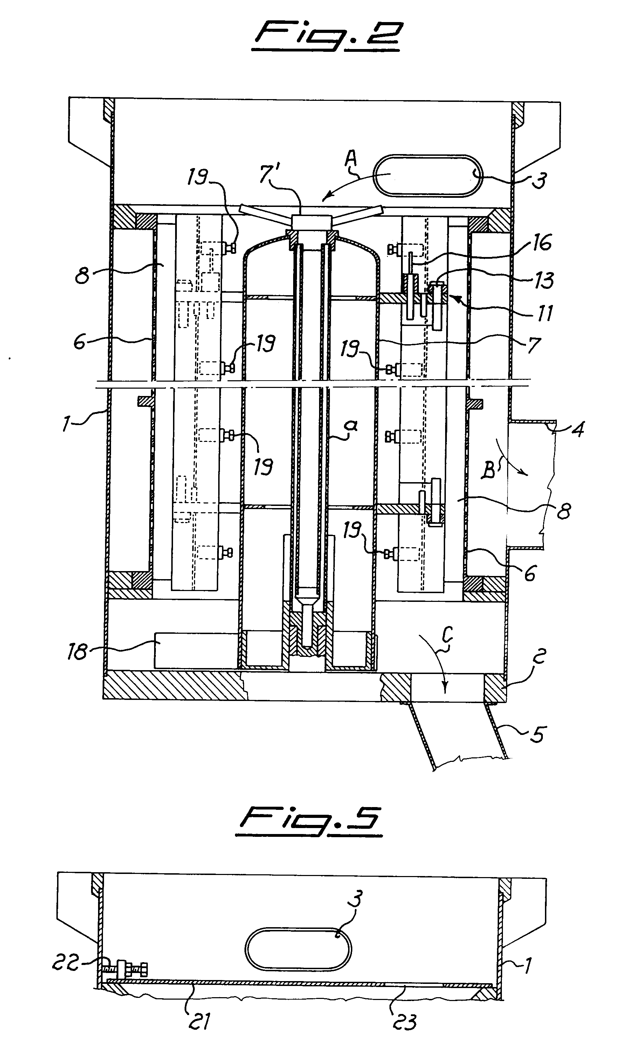

Referring particularly to figs.1 and 2, the apparatus to filter thin layers or fibrous suspensions in general according to the present invention essentially includes a shell 1 closed below by a bed 2 and provided in its upper part with the entrance 3 of the suspension, according to the arrow A, in its lateral part with the exit 4 of the accepted part, according to the arrow B, and lower down with the exit 5 of the refuse, according to the arrow C. Inside said shell a perforated drum 6 is integrally positioned, a rotor 7 revolving therein, around the shaft a, provided with scrapers 8 which rotate integrally with the rotor 7 along the drum 6. As shown in fig.1, said scrapers 8 are three, but they could be less or more than that.

As particularly shown in fig.4, each scraper 8 is carried by a scraper carrier 9, spring-like means 10 being positioned therein, suitable to push the scraper against the drum 6. Furthermore, disengaging means 11 are applied to each scraper carrier 9, suitable to disengage each scraper 8 from said drum 6.

Each of said disengaging means 11 is carried by a support 12 integral with said rotor 7 and pivoted on said scraper carrier 9 by means of a pin 13 parallel to said scrapers 8. A spring 14 wound around the pin 13 has an end secured on a little pin 15 integral with said support 12, and the other end acting on the scraper carrier 9, thus making the scraper 8 pivot around said pin 13. The disengaging means 11 integral with each scraper carrier 9 also include a knob 16 integral with a support 17 fixed to the scraper carrier 9, so that said knob 16 shifts the scraper carrier 9 and therefore the scraper 8 around the pin 13 from the position of fig.1 to that of fig.4, thus blocking the scraper out of touch with the drum 6.

It should be noted that each scraper 8 is divided in multiple independent parts, so that the scraper fits well the unevenness of the drum 6, and that the top of said rotor 7 is convex, as shown in fig.2, so that the suspension passing through the entrance 3 flows over the convex part of the rotor and spreads evenly all around it. The body of the rotor 7 is a watertight shell properly sized to reduce the volume of layer or suspension contained within the apparatus. The body of the rotor 7 is fixed through the screw 7' which makes it integral with the driving shaft a, avoiding oscillations harmful to the scraping effect of the scrapers 8 and the possible slipping out of the driving seat due to floating. Furthermore, said rotor 7 is provided in its lower part with a vane 18 which is suitable to convey the waste towards the exit 5 of the refuse during its rotation.

It should also be noted that, in an advantageous way, each operating scraper 8 is perpendicular to the drum 6 and that, to adjust the scrapers, the said spring-like means 10, consisting of coil springs contained in the said scraper carriers 9 and wound on the pins 19, may be adjusted by means of ring nuts 20 which, being screwed or unscrewed in the inner part of said scraper carriers, vary the pressure of the scrapers 8 on the drum 6. Said perpendicular position, as shown in fig.1, is achieved through a pivoting effect by means of the springs 14, while with the knob 16 in the position of fig.4, the springs 14 keep the scrapers 8 in a fixed position.

As shown in fig.2, the said disengaging means 11 are positioned in the upper part of the apparatus so as to make easier the accessibility to said disengaging means, while a plurality of spring-like means 10 is provided on the whole length of the scrapers 8 to achieve an even pressure of the scrapers against the drum.

As shown in fig.5, according to another embodiment of the upper part of the apparatus, below the entrance 3 of the suspension a distributing plate 21 is fixed to the apparatus by means of positioning screws 22. Said plate 21 is provided with holes 23 suitable to generate a forced turbulence in the suspension entering through said holes 23. Each hole 23 is positioned above the operating area of the scrapers 8. Said distributing plate 21, in a further embodiment, may be made integral with the rotor 7 so that the feed flow going through the holes 23 is always above the scrapers 8. Said flow cooperates to the separation and precipitation towards the bottom of the material which must be refused through the exit 5.

Yet another version is shown in fig.6, wherein, on the side opposite to said disengaging means 11, a bent plate 24 is fixed to each scraper carrier 9 by one side and with the other side it abuts on the intermediate part of the scraper 8, leaving free the end part of the scraper itself perpendicular to the drum 6. This arrangement improves the scraping of the suspension from the inner wall of the drum 6.

As it may be observed from the description given above, the advantages of the present invention are the following:
greater ease of disengaging of the scrapers to insert or to pull out the same, in that the disengaging means are carried on each scraper carrier and they are not separate from the apparatus as in the prior art;
better fitting of the scrapers to the unevenness of the drum, in that each scraper is vertically divided in multiple independent parts and the pressure of the scrapers against the drum may be adjusted;
evenness of distribution of the suspension along the rotor due to the particular convex shape thereof;
the rotation of the scrapers may be carried out in either direction, due to the fact that the scrapers are positioned perpendicular to the drum;
generation of a forced turbulence in the suspension as a consequence of the addition in the upper part of the apparatus of a plate provided with holes;
better scraping of the residue stuck on the inner wall of the drum owing to the introduction of the aforementioned bent plate fixed on the scraper carrier and partially abutting on the scraper.

Obviously, changes and/or modifications may be made to the apparatus according to the present invention, without exceeding the limits of the protection of the invention, as hereinafter claimed.

## Claims

1. An apparatus to filter thin layers or fibrous suspensions in general including an entrance (3) of the suspension positioned in the upper part of the apparatus, a fixed perforated drum (6), a rotor (7) revolving therein, an exit (4) of the accepted part, an exit (5) of the refuse and scrapers (8) rotating integrally with said rotor (7), characterized in that each scraper (8) is carried by a scraper carrier (9), in that spring-like means (10) push the scraper (8) against the drum (6), and in that disengaging means (11) are applied to each scraper carrier (9) so that the scrapers (8) may be shifted one by one from said drum (6).

2. An apparatus according to claim 1, characterized in that each of said disengaging means (11) is carried on a support (12) integral with said rotor (7) and pivoted on said scraper carrier (9) by a pin (13) parallel to said scrapers, and a spring (14) carried by said pin (13) acts on the scraper carrier (9) making the respective scraper (8) pivot around said pin (13), and in that the disengaging means (11) are integral with said scraper carrier (9) and consist in a knob (16) suitable to shift the scraper carrier (9) around said pin (13) blocking the respective scraper (8) out of touch with the drum (6).

3. An apparatus according to anyone of the preceding claims, characterized in that each scraper (8) is divided in multiple parts connected to each other.

4. An apparatus according to anyone of the preceding claims, characterized in that the upper part of said rotor (7) consists in a convex member located in the center of the apparatus.

5. An apparatus according to anyone of the preceding claims, characterized in that a vane (18) suitable to convey the waste to the exit (5) of the refuse is integral with the rotor (7) in the lower part thereof.

6. An apparatus according to anyone of the preceding claims, characterized in that each operating scraper (8) is perpendicular to the drum (6).

7. An apparatus according to anyone of the preceding claims, characterized in that said spring-like means (10) consist of coil springs contained in the scraper carriers (9) and in that adjusting means (20) are provided to adjust the pressure of said spring-like means (10) against the scrapers (8) and subsequently of the latter against the drum (6).

8. An apparatus according to anyone of the preceding claims, characterized in that said disengaging means (11) are applied in the upper part of the apparatus to make easier the accessibility to said disengaging means (11).

9. An apparatus according to anyone of the preceding claims, characterized in that in the upper part of the apparatus below the entrance (3) of the suspension a distributing plate (21) is provided, this being provided with holes (23) to create a forced turbulence in the suspension, each hole (23) being positioned above the operating area of the scrapers (8).

10. An apparatus according to anyone of the preceding claims, characterized in that on the side opposite to said disengaging means (11), a bent plate (24) is fixed to each scraper carrier (9) by a side and the other angled side (25) has its free end abutting on the intermediate part of the scraper (8), leaving the end thereof free.

11. An apparatus according to claim 9, characterized in that said distributing plate (21) may be integral with the upper fixed part of the apparatus or with the rotor (7) above the scrapers (8).
